# EUROPEAN PATENT SPECIFICATION

(11) **EP 0 666 024 B1**
(45) Date of publication and mention of the grant of the patent: **18.10.2000**
(21) Application number: 95200201.2
(22) Date of filing: 27.01.1995
(51) Int. Cl.: A01J 11/00, A01J 7/00, A01J 15/00, A01J 25/00

(54) **A construction including an implement for processing milk into cheese and/or butter**
Vorrichtung mit einem Gerät zur Verarbeitung von Milch in Käse und/oder Butter
Construction comprenant un dispositif de transformation du lait en fromage et/ou en beurre

(30) Priority: 04.02.1994 NL 9400178
(43) Date of publication of application: 09.08.1995
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- FR-A- 2 516 356
- US-A- 3 780 644

## Description

The present invention relates to a construction as described in the preamble of claim 1. In practice, the major part of the farmers are delivering the milk obtained by them to dairy factories. Cheese and/or butter are produced at the farm by hand at a small scale only; this is, however, a very labour-intensive and hard work. The invention has for its object to provide an alternative thereto. According to the invention, the construction therefore includes the features as described in the characterizing part of claim 1. The implement for processing milk into cheese and/or butter is, therefore, preferably located at the farm where the milk is recovered. By automatically producing cheese and/or butter contiguous to milking, the farmer has the possibility to produce various dairy products in a simple manner, so that it is not necessary that all the milk is sold to the dairy factory; cheese and/or butter can then also directly be supplied by the farmer to third parties. Although approximately ten to twelve kilos of cheese can be produced from approximately 100 litres of milk, the additional returns of the cheese are in general such that it may also be financially interesting for the farmer to use at least a portion of the milk obtained at his farm for the production of cheese.

Preferably, milk, which was recovered shortly before and is still warm, is used for the production of cheese. As this milk need not be delivered to the dairy factory, it is not necessary to convey the milk to a cooling tank, but it can be directly transferred to the implement for automatically processing milk into cheese and/or butter. Since the procedure of manufacturing cheese is effected at an elevated temperature, it is advantageous, the more so when the milk is processed immediately, not to cool down the milk first to be warmed up at a later instant. A certain savings in energy is consequently possible when an implement for milking animals is available, from which the milk obtained is directly conveyed to the implement for processing milk into cheese and/or butter. It is then advantageous for the implement for milking animals to include a milking machine and to be located remotely from the implement for processing milk into cheese and/or butter, the milking machine being connected by means of one or more lines to the said last implement, as, for reasons of hygiene, it is advisable to keep the implement for processing milk into cheese and/or butter separate from the implement in which the animals are milked. An efficient production of cheese and/or butter is more specifically obtained when the construction includes an implement for automatically milking animals. It is then advantageous for this implement to comprise also one or more milking robots. In such a milking implement, the teat cups are automatically connected to the udder of the animals entering the area where the milking machine is located, whilst contiguous thereto milking is effected also automatically. All this promotes the continuous supply of milk to the implement for processing milk into cheese and/or butter. Such an automatic milking implement is preferably arranged in a shed, e.g. a loose housing for animals. The area in which milk is processed into cheese and/or butter, is then separate from the area or the shed where the animals are automatically milked. Especially when use is made of a mobile automatic milking machine with milking robots, it is advantageous when also the implement for processing milk into cheese and/or butter is a mobile one.

In accordance with an other preferred feature of the invention, the implement for processing milk into cheese and/or butter includes at least one milk tank connected to a milking machine which is part of the construction. The implement preferably further includes at least one cheese trough provided with a lactic acid dosing device and a rennet dosing device, whilst process control means are present for admitting milk from a milk tank into the cheese trough, adding lactic acid, optionally adjusting the temperature of the mixture present in the cheese trough to the desired coagulation temperature and adding rennet. The implement for processing milk into cheese and/or butter preferably further includes at least one cheese press which is controlled by the process controlling means provided for that purpose, in which press, after separation of the whey, the curd is placed. The cheese presses may be arranged on a turret unit located under the discharge aperture of a cheese trough. Finally, it is advantageous for the implement for processing milk into cheese and/or butter to be provided with a robot for moving and turning the finished cheese. Such a robot may be movable over rails along racks or shelves in the implement for processing milk into cheese and/or butter.

In addition to the said means for producing cheese, the implement for processing milk into cheese and/or butter may include at least one milk separator, in which the milk is skimmed and the cream is used for the production of butter, under the control of the process control means. For the production of butter, the implement for processing milk into cheese and/or butter preferably includes one or more churning cylinders which are controlled by the process control means and into which the cream is fed from a milk separator, the cream coagulating in the churning cylinders to form butter pellets, buttermilk being separated in the process. In addition thereto, means for kneading, weighing and packing the butter may be present, as well as a conveyor belt for the finished butter.

The process control means for manufacturing cheese and/or butter may include sensors for process monitoring, as well as a computer and control valves for process control. These process control means can partly be combined with the process control means required for the proper functioning of the milking robots and the automatic milking of the animals. Thus, a computer which is used for controlling the process for the manufacture of cheese and/or butter, as well as for the automatic connection of a milking cluster and the automatic milking of animals can be arranged in a separate area located in the shed next to the milking parlour, whilst other components of the process control means, e.g. the sensors and control valves, are directly accommodated on the several apparatuses used for the manufacture of cheese or butter.

For a better understanding of the invention and to show how the same may be carried into effect, reference will now be made, by way of example, to the accompanying drawings, in which:
Figure 1 is a schematic view of the construction in accordance with the invention;

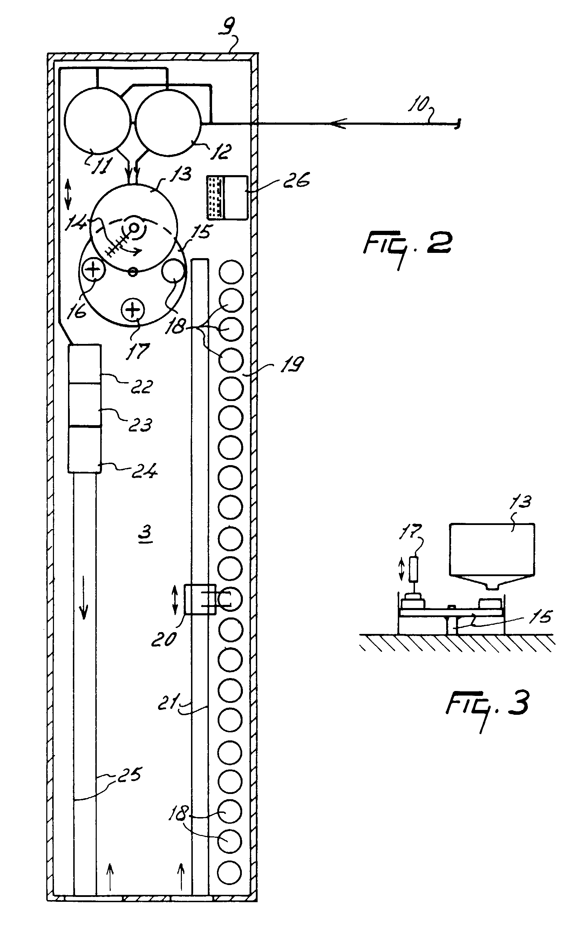

Figure 2 shows an embodiment of an implement for processing milk into cheese and/or butter in accordance with the invention, and
Figure 3 is a side view of a portion of the implement shown in Figure 2.

In the drawings, corresponding components have been given the same reference numerals.

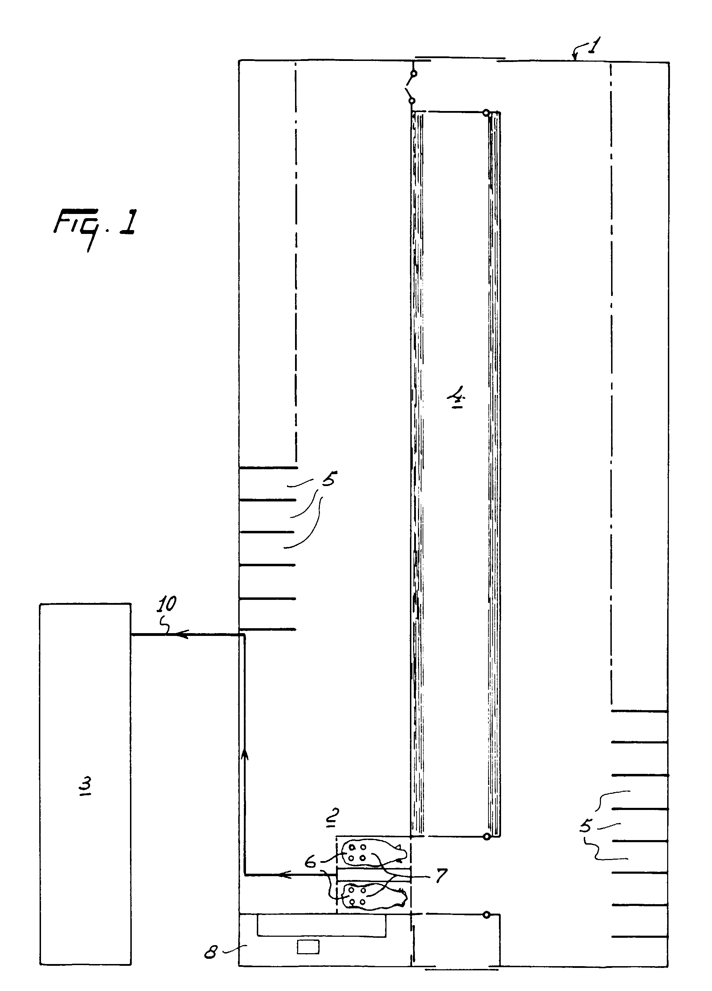

The construction shown schematically in Figure 1 illustrates a shed 1, in the form of a loose housing, including an implement 2 for milking animals, and an implement 3 for processing milk into cheese and/or butter. A feeding area 4 is provided in the longitudinal direction of the loose housing 1. Cubicles 5 are arranged at both sides of this feeding area 4 along the outer wall. The implement 2 for milking animals, located in the loose housing 1, is designed as an automatically operating implement. The milking machine 6 which is part of the implement 2 then includes two milking robots 7, with the aid of which teat cups can automatically be connected to the teats of the animals present in the area in which the milking machine is located. The milking machine 6 is not only of an automatically operating type in the sense that the teat cups are automatically connected to the teats of the animals, but also that the subsequent milking procedure is fully automated. The required process control means are provided for that purpose with a computer which is accommodated in a special room 8, near the automatically operating milking implement. In addition, this room 8 also houses all those process control means which need not of necessity be accommodated in the implement 2 for automatically milking animals proper. Outside the implement 2 for automatically milking animals, the animals can move freely about in the loose housing 1, whilst making use of the cubicles 5 or taking food deposited in troughs or channels along the feeding area 4. The loose housing 1 has, of course, a number of doors, via which the several rooms can be entered and through which fodder can be brought into the feeding area 4. The animals present in the loose housing 1 can freely move to the implement 2 to be milked there; when an insufficient period of time has elapsed since the previous milking turn, then the animals will either be directly dismissed from the milking implement to the free space in the loose housing 1, or they are even not admitted to the milking implement at all. Since the manner in which all this can be realized is beyond the scope of the present invention, it will not be described in greater detail here.

Via one or more lines 10, milk is conveyed from the implement 2 for automatically milking animals to the implement 3 for processing milk into cheese and/or butter. Said last implement is located separately from the loose housing 1 and, if so desired, may be of a mobile design, which may more in particular be of importance when also the implement 2 for automatic milking is of a mobile design. In the present embodiment, the implement 3 for processing milk into cheese and/or butter is provided for that purpose with a movable container 9, whose dimensions may be of the order of 10 by 2.5 metres. This container 9 includes two milk tanks 11 and 12, which are connected to the lines 10 extending from the milking machine 6. The milk lines 10 are preferably insulated, so that heat losses in these lines 10 are limited. The temperature in the milk tanks 11 and 12 will, therefore, be only little lower than the temperature of the milk immediately after milking; this is of the order of 35°C. This means, however, that the milk in the milk tanks 11 and 12 must be processed relatively rapidly, before it turns sour. The milk from the milk tanks 11 and 12 is automatically and alternately conveyed to a cheese trough 13. When the milk from the milk tank 11 is automatically conveyed to the cheese trough 13, the milk tank 12 is connected to the milk line 10, and when thereafter the milk from the milk tank 12 is automatically conveyed to the cheese trough 13, the milk tank 11 is connected to the milk line 10. The cheese trough 13 is provided with a lactic acid metering apparatus and a rennet metering apparatus. Lactic acid is first automatically fed in the required quantity into the milk in the cheese trough 13 and stirred through the milk. When thereafter the mixture obtained is raised to the desired curdling temperature, the desired quantity of rennet is automatically added and the curd is obtained, from which, after coagulation, the liquid, called whey, must be separated. When the mass has coagulated to a sufficient extent, it is cut with the aid of an automatically operating cheese stirring machine 14; this promotes separation of the whey from the curd. The whey is thereafter extracted by suction through a whey basket made of perforated stainless steel disposed in the cheese trough 13. A turret unit 15 is positioned under the cheese trough 13, which turret unit is provided in the present embodiment with two cheese presses 16 and 17 which are automatically filled with the curd. The cheese is given its ultimate shape by means of pressing. The cheese 18 thus produced must thereafter be removed from the turret unit and be stored in racks or on shelves 19 disposed against the wall of the container 9, it being necessary for the cheeses to be turned regularly. For this purpose there is present a special robot 20, which can be moved along rails 21 in the longitudinal direction through the container 9 along the racks or shelves 19. Using this robot 20, the finished cheese can automatically be removed from the turret unit 15 and be deposited on the racks or shelves 19, whilst this robot also provides automatic turning of the cheese and the subsequent transportation thereof to e.g. a truck which has been driven to near the end of the container 9. Milk obtained by means of the milking machine can be conveyed, with the aid of a pump, not only to the milk tanks 11 and 12 but also to a separator 22, in which the whole milk is skimmed. The skimmed milk can be fed back to one of the milk tanks 11 or 12 for the preparation of cheese on the basis of skimmed milk. The cream can be forwarded to churning cylinders 23 for the production of butter. In a first churning cylinder, a mass of butter particles is created by an intensive working of the milk by means of a rapidly rotating beater device. This mass is thereafter transferred to a second churning cylinder comprising a slowly rotating beater device. The butter particles and buttermilk produced in the second churning cylinder are passed on via a very fine sieve, through which the buttermilk is drained off for the major part, to a kneader member 24. In this member, the butter particles are kneaded into a uniform mass, whereafter the butter is automatically weighed out and packed. The container 9 incorporates a conveyor belt 25 connected to the kneader member 24, by means of which belt 25 the packed butter is discharged to the end of the container, where the butter can be removed from the belt in order to be transported.

The implement for processing milk into cheese and/or butter is of a fully automated design. The process control means required therefor can be accommodated entirely in the implement for processing milk into cheese and/or butter, as well as partly in this implement and partly in the computer room 8 in the shed 1. More in particular the implement for processing milk into cheese and/or butter may have its own computer system 26, or a common computer may be present in the computer room 8, which common computer can be used for both controlling the milking robots and the automatic milking operation of the animals, and also for processing milk into cheese and/or butter. The sensors and control valves which are part of the process control means will, of course, be directly accommodated on the apparatuses arranged in the container 9, which apparatuses are necessary for the production of cheese and/or butter, on the basis of the milk supplied via the milk line 10.

The invention is not limited to the embodiment described in the foregoing, but also relates to all types of modifications, of course in sofar they are within the scope of the attached claims.

## Claims

1. A construction including an implement (3) for processing milk into cheese and/or butter, characterized in that the construction includes an implement for milking animals which via conveying means (10) is coupled to the implement (3) for processing milk into cheese and/or butter, the construction furthermore comprising process control means (26), with the aid of which an optionally chosen quantity of the milk obtained by the milking implement (3) is automatically conveyed by the conveying means (10) to the implement (3) for processing milk into cheese and/or butter.

2. A construction as claimed in claim 1, characterized in that the implement (3) for processing milk into cheese and/or butter is located at the farm where the milk is obtained.

3. A construction as claimed in claim 1 or 2, characterized in that the implement (2) for milking animals includes a milking machine (6) and is located remotely from the implement (3) for processing milk into cheese and/or butter, the milking machine (6) being connected to the said last implement (3) via one or more lines (10).

4. A construction as claimed in any one of the preceding claims, characterized in that it includes an implement (2) for automatically milking animals.

5. A construction as claimed in claim 4, characterized in that the implement (2) for automatically milking animals includes one or more milking robots (7).

6. A construction as claimed in claim 4 or 5, characterized in that it includes a shed (1), e.g. a loose housing for the animals, in which the implement (2) for automatically milking is arranged.

7. A construction as claimed in any one of the preceding claims, characterized in that the area, in which milk is processed into cheese and/or butter, is separated from the room or shed (1) in which the animals are milked automatically.

8. A construction as claimed in any one of the preceding claims, characterized in that the implement (3) for processing milk into cheese and/or butter is a mobile one.

9. A construction as claimed in any one of the preceding claims, characterized in that the implement (3) for processing milk into cheese and/or butter includes at least one milk tank (11, 12) which is connected to a milking machine (6) which is part of the construction.

10. A construction as claimed in any one of the preceding claims, characterized in that the implement (3) for processing milk into cheese and/or butter includes at least one cheese trough (13) having a metering apparatus and process control means (26) being present for admitting milk into the cheese trough (13), adding lactic acid, optionally matching the temperature of the mixture contained in the cheese trough (13) to the desired temperature.

11. A construction as claimed in any one of the preceding claims, characterized in that the implement (3) for processing milk into cheese and/or butter includes at least one cheese press (16, 17) which is controlled by process control means (26) provided for that purpose and in which, after separation of the whey, the curd is placed.

12. A construction as claimed in claim 11, characterized in that the cheese presses (16, 17) are located on a turret unit (15) which can be moved under the discharge aperture of a cheese trough (13).

13. A construction as claimed in any one of the preceding claims, characterized in that the implement (3) for processing milk into cheese and/or butter includes a robot (20) for moving and turning the finished cheese (18).

14. A construction as claimed in claim 13, characterized in that the robot (20) is movable over rails (21) along racks or shelves (19) provided for the purpose in the implement (13) for processing milk into cheese and/or butter.

15. A construction as claimed in any one of the preceding claims, characterized in that the implement (3) for processing milk into cheese and/or butter includes at least one milk separator (22) which is controlled by process control means (26) and in which the milk is skimmed, the cream being used for producing butter under the control of the process control means (26).

16. A construction as claimed in claim 15, characterized in that the implement (3) for processing milk into cheese and/or butter includes one or more churning cylinders (23) which are under the control of the process control means (26) and into which the cream is fed from the milk separator (22), this cream coagulating in the churning cylinders (23) into butter pellets, buttermilk being separated in the process.

17. A construction as claimed in claim 16, characterized in that a conveyor belt (25) for the finished butter is available.

18. A construction as claimed in any one of the preceding claims, characterized in that for the purpose of producing cheese and/or butter the process control means (26) are provided with sensors for process monitoring, as well as with a computer and control valves for the process control.

## Patentansprüche

1. Vorrichtung mit einem Gerät (3) zur Verarbeitung von Milch zu Käse und/oder Butter,
dadurch gekennzeichnet, daß die Vorrichtung ein Gerät zum Melken von Tieren aufweist, das über eine Beförderungsvorrichtung (10) mit dem Gerät (3) zur Verarbeitung von Milch zu Käse und/oder Butter verbunden ist, wobei die Vorrichtung ferner eine Programmsteuerung (26) aufweist, mit deren Hilfe eine frei wählbare Menge der mittels des Melkgerätes (2) gewonnenen Milch automatisch von der Beförderungsvorrichtung (10) zu dem Gerät (3) zur Verarbeitung von Milch zu Käse und/oder Butter befördert wird.

2. Vorrichtung nach Anspruch 1,
dadurch gekennzeichnet, daß das Gerät (3) zur Verarbeitung von Milch zu Käse und/oder Butter in dem Betrieb angeordnet ist, in dem die Milch gewonnen wird.

3. Vorrichtung nach Anspruch 1 oder 2,
dadurch gekennzeichnet, daß das Gerät (2) zum Melken von Tieren eine Melkmaschine (6) enthält und entfernt von dem Gerät (3) zur Verarbeitung von Milch zu Käse und/oder Butter angeordnet ist, wobei die Melkmaschine (6) mit dem letztgenannten Gerät (3) über eine oder mehrere Leitungen (10) verbunden ist.

4. Vorrichtung nach einem der vorhergehenden Ansprüche,
dadurch gekennzeichnet, daß die Vorrichtung ein Gerät (2) zum automatischen Melken von Tieren enthält.

5. Vorrichtung nach Anspruch 4,
dadurch gekennzeichnet, daß das Gerät (2) zum automatischen Melken von Tieren einen oder mehrere Melkroboter (7) enthält.

6. Vorrichtung nach Anspruch 4 oder 5,
dadurch gekennzeichnet, daß die Vorrichtung einen Stall (1), beispielsweise einen Laufstall für die Tiere enthält, in welchem das Gerät (2) zum automatischen Melken angeordnet ist.

7. Vorrichtung nach einem der vorhergehenden Ansprüche,
dadurch gekennzeichnet, daß der Bereich, in dem Milch zu Käse und/oder Butter verarbeitet wird, von dem Raum oder Stall (1) getrennt ist, in welchem die Tiere automatisch gemolken werden.

8. Vorrichtung nach einem der vorhergehenden Ansprüche,
dadurch gekennzeichnet, daß das Gerät (3) zur Verarbeitung von Milch zu Käse und/oder Butter transportabel ist.

9. Vorrichtung nach einem der vorhergehenden Ansprüche,
dadurch gekennzeichnet, daß das Gerät (3) zur Verarbeitung von Milch zu Käse und/oder Butter mindestens einen Milchtank (11, 12) enthält, der mit einer Melkmaschine (6) verbunden ist, die Teil der Vorrichtung ist.

10. Vorrichtung nach einem der vorhergehenden Ansprüche,
dadurch gekennzeichnet, daß das Gerät (3) zur Verarbeitung von Milch zu Käse und/oder Butter mindestens eine Käsewanne (13) mit einer Dosiervorrichtung und einer Programmsteuerung (26) enthält, die dazu dienen, Milch in die Käsewanne (13) einzuleiten, Milchsäure zuzusetzen und wahlweise die Temperatur des in der Käsewanne (13) enthaltenen Gemisches an die gewünschte Temperatur anzupassen.

11. Vorrichtung nach einem der vorhergehenden Ansprüche,
dadurch gekennzeichnet, daß das Gerät (3) zur Verarbeitung von Milch zu Käse und/oder Butter mindestens eine Käsepresse (16, 17) enthält, die von der hierfür vorgesehenen Programmsteuerung (26) gesteuert wird, und auf die nach Abscheiden der Molke der Bruch gebracht wird.

12. Vorrichtung nach Anspruch 11,
dadurch gekennzeichnet, daß die Käsepressen (16, 17) auf einer Revolvereinheit (15) angeordnet sind, die unter die Auslaßöffnung einer Käsewanne (13) bewegbar ist.

13. Vorrichtung nach einem der vorhergehenden Ansprüche,
dadurch gekennzeichnet, daß das Gerät (3) zur Verarbeitung von Milch zu Käse und/oder Butter einen Roboter (20) zum Bewegen und Drehen des fertigen Käses (18) enthält.

14. Vorrichtung nach Anspruch 13,
dadurch gekennzeichnet, daß der Roboter (20) auf Schienen (21) an Regalen oder Fachbrettern (19) entlangbewegbar ist, die zu diesem Zweck in dem Gerät (3) zur Verarbeitung von Milch zu Käse und/oder Butter angeordnet sind.

15. Vorrichtung nach einem der vorhergehenden Ansprüche,
dadurch gekennzeichnet, daß das Gerät (3) zur Verarbeitung von Milch zu Käse und/oder Butter mindestens einen Milchseparator (22) enthält, der von der Programmsteuerung (26) gesteuert wird, und in dem die Milch entrahmt wird, wobei der Rahm von der Programmsteuerung (26) gesteuert zu Butter verarbeitet wird.

16. Vorrichtung nach Anspruch 15,
dadurch gekennzeichnet, daß das Gerät (3) zur Verarbeitung von Milch zu Käse und/oder Butter einen oder mehrere Butterfertigungszylinder (23) enthält, die von der Programmsteuerung (26) gesteuert werden, und in die der Rahm von dem Milchseparator (22) eingeleitet wird, wobei dieser Rahm in den Butterfertigungszylindern (23) zu Butterkügelchen koaguliert und während des Vorganges Buttermilch abgeschieden wird.

17. Vorrichtung nach Anspruch 16,
dadurch gekennzeichnet, daß ein Förderband (25) für die fertige Butter zur Verfügung steht.

18. Vorrichtung nach einem der vorhergehenden Ansprüche,
dadurch gekennzeichnet, daß zum Zwecke der Herstellung von Käse und/oder Butter die Programmsteuerung (26) mit Sensoren zur Programmüberwachung sowie mit einem Computer und Steuerventilen für die Programmsteuerung versehen ist.

## Revendications

1. Installation comportant un dispositif (3) de transformation du lait en fromage et/ou beurre, caractérisée en ce que l'installation comporte un dispositif de traite d'animaux qui via des moyens de transport (10) est relié au dispositif (3) de transformation du lait en fromage et/ou beurre, l'installation comportant de plus des moyens de commande du processus (26), à l'aide desquels une quantité choisie facultativement du lait obtenu par le dispositif de traite (3) est transportée de manière automatique par les moyens de transport (10) vers le dispositif (3) de transformation du lait en fromage et/ou beurre.

2. Installation selon la revendication 1, caractérisée en ce que le dispositif (3) de transformation du lait en fromage et/ou beurre est positionné au niveau de la ferme où le lait est obtenu.

3. Installation selon la revendication 1 ou 2, caractérisée en ce que le dispositif (2) de traite d'animaux comporte une trayeuse (6) et est positionné à distance du dispositif (3) de transformation du lait en fromage et/ou beurre, la trayeuse (6) étant reliée audit dernier dispositif (3) via une ou plusieurs lignes (10).

4. Installation selon l'une quelconque des revendications précédentes, caractérisée en ce qu'elle comporte un dispositif (2) de traite automatique d'animaux.

5. Installation selon la revendication 4, caractérisée en ce que le dispositif (2) de traite automatique d'animaux comporte un ou plusieurs robots de traite (7).

6. Installation selon la revendication 4 ou 5, caractérisée en ce qu'elle comporte un hangar (1), par exemple un bâtiment ouvert pour des animaux, dans lequel le dispositif (2) de traite automatique est agencé.

7. Installation selon l'une quelconque des revendications précédentes, caractérisée en ce que la zone, dans laquelle le lait est transformé en fromage et/ou beurre, est séparée de la pièce ou hangar (1) dans lequel les animaux sont traits de manière automatique.

8. Installation selon l'une quelconque des revendication précédentes, caractérisée en ce que le dispositif (3) de transformation du lait en fromage et/ou beurre est un dispositif mobile.

9. Installation selon l'une quelconque des revendications précédentes, caractérisée en ce que le dispositif (3) de transformation du lait en fromage et/ou beurre comporte au moins un réservoir à lait (11, 12) qui est relié à une trayeuse (6) qui est une partie de l'installation.

10. Installation selon l'une quelconque des revendications précédentes, caractérisée en ce que le dispositif (3) de transformation du lait en fromage et/ou beurre comporte au moins une cuve à fromage (13) ayant un appareil de dosage et des moyens de commande du processus (26) présents pour laisser entrer du lait dans la cuve à fromage (13), ajouter de l'acide lactique, ajuster de manière facultative la température du mélange contenu dans la cuve à fromage (13) à la température voulue.

11. Installation selon l'une quelconque des revendications précédentes, caractérisée en ce que le dispositif (3) de transformation du lait en fromage et/ou beurre comporte au moins une presse à fromage (16, 17) qui est commandée par les moyens de commande du processus (26) agencés dans ce but et dans laquelle, après séparation du petit lait, le caillé est placé.

12. Installation selon la revendication 11, caractérisée en ce que les presses à fromage (16, 17) sont positionnées sur une unité de tourelle (15) qui peut être déplacée sous l'ouverture d'évacuation d'une cuve à fromage (13).

13. Installation selon l'une quelconque des revendications précédentes, caractérisée en ce que le dispositif (3) de transformation du lait en fromage et/ou beurre comporte un robot (20) pour déplacer et retourner le fromage fini (18).

14. Installation selon la revendication 13, caractérisée en ce que le robot (20) est mobile sur des rails (21) le long de râteliers ou de rayons (19) agencés dans ce but dans le dispositif (13) de transformation du lait en fromage et/ou beurre.

15. Installation selon l'une quelconque des revendications précédentes, caractérisée en ce que le dispositif (3) de transformation du lait en fromage et/ou beurre comporte au moins un séparateur de lait (22) qui est commandé par les moyens de commande du processus (26) et dans lequel le lait est écrémé, la crème étant utilisée pour produire du beurre sous la commande des moyens de commande du processus (26).

16. Installation selon la revendication 15, caractérisée en ce que le dispositif (3) de transformation du lait en fromage et/ou beurre comporte un ou plusieurs cylindres de barattage (23) qui sont sous la commande des moyens de commande du processus (26) et dans lesquels la crème est alimentée à partir du séparateur de lait (22), cette crème coagulant dans les cylindres de barattage (23) en particules de beurre, le babeurre étant séparé pendant le processus.

17. Installation selon la revendication 16, caractérisée en ce qu'une bande de convoyeur (25) pour le beurre fini est à disposition.

18. Installation selon l'une quelconque des revendications précédentes, caractérisée en ce que dans le but de produire du fromage et/ou du beurre, les moyens de commande du processus (26) sont munis de détecteurs pour surveiller le processus, de même que d'un ordinateur et de vannes de commande pour commander le processus.
